# EUROPEAN PATENT APPLICATION

(11) **EP 2 161 872 A1**
(43) Date of publication of application: **10.03.2010**
(21) Application number: 07744518.7
(22) Date of filing: 31.05.2007
(51) Int. Cl.: H04L 9/08

(54) **NETWORK RELAY DEVICE, COMMUNICATION TERMINAL, AND ENCRYPTION COMMUNICATION METHOD**

(71) Applicant: Panasonic Corporation, Kadoma-shi Osaka 571-8501 (JP)
(72) Inventor: KAMIKURA, Atsushi c/o Panasonic Corporation, 2-1-61, Shiromi, Chuo-ku, Osaka 540-6207 (JP); IKEDA, Shinkichi c/o Panasonic Corporation, 2-1-61, Shiromi, Chuo-ku, Osaka 540-6207 (JP); HASHIMOTO, Yuji c/o Panasonic Corporation, 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/061130
(87) International publication number: WO 2008/146395

(57) **Abstract**

A time required for actually starting encrypted communication after a trigger of an encrypted communication is shortened. When a key exchanging process is to be applied in order to exchange key information upon encrypting a communication performed between a communication terminal 11 and a gateway device 25, a network relay device 15 relays the key information, contents of the key exchanging process are divided into a former-half process and a later-half process, and the network relay device 15 executes the former-half process substitute for the communication terminal 11 to establish "IKE SA". Then, information obtained as the result of the former-half process is transferred from the network relay device 15 to the communication terminal 11. Then, the later-half process of the key exchange process is executed between the communication terminal 11 and the gateway device 25, the communication terminal 11 and the gateway device 25 share common key information with each other to establish "IPsec SA", and an encrypted communication is performed by using this key information.

## Description

### Technical Field

The present invention relates to a network relay device, a communication terminal, and an encrypted communication method in a communication system that performs encrypted communication by performing relay communications between a plurality of networks.

### Background Art

In recent years, the research/development and the standardization activity on an interconnection between a cellular phone network and a wireless LAN (local area network), i.e., a 3G/WLAN Interworking, are carried out actively. Because the interconnection between the cellular phone network and the wireless LAN can be established, the user can enjoy a high-speed performance of the wireless LAN while utilizing the charging system and the procedure in user's authenticity in the cellular phone network. For example, a cellular phone terminal device into which a wireless LAN interface is installed can be connected to the cellular phone network via a wireless LAN access point, and can utilize the voice conversation and contents in the cellular phone network. In this case, the cellular phone terminal device with wireless LAN interface is connected from the wireless LAN to the cellular phone network via an access network. In this event, guarantee of security is very important in the communication that is performed via the access network.

Therefore, in the case of the communication system that assumes IPv6 as the next-generation communication protocol, for example, it is common that IPsec (Security Architecture for Internet Protocol) should be employed as the protocol that is used to guarantee the security. In this case, IPsec can be employed in the IPv4 environment.

Here, an outline of IPsec will be explained hereunder. In the common IP communication that does not employ IPsec, a packet with a simple configuration that is constructed by an IP header and data is employed in communication. In contrast, in the communication that employs IPsec, an encrypted packet is employed. In this encrypted packet, an encryption header and authentication data are contained in addition to the IP header and encrypted data. A set of the encrypted data, the encryption header, and the authentication data is called ESP (Encapsulating Security Payload). That is, the encrypted data is capsulated with the encryption header and the authentication data.

The encryption header is used to enable the receiving side to decrypt correctly the received cryptograph. The encryption header contains SPI (Security Parameter Index) indicating how the data should be encrypted (which algorithm and which cryptographic key are employed), by using the numerical value, and the sequence number indicating what number the packet should correspond to in the overall data.

The authentication data is used to check whether or not the received data have been tampered in midstream. A hash value derived by calculating a hash function based on a combination of the original packet and an authentication key is written into the authentication data.

Since such encrypted communication is performed, both IPsec terminating devices have to share the key in using IPsec. Concretely, a common key cryptography is employed for the encryption in IPsec, so that a cryptographic key must be exchanged in advance mutually between the transmitter side and the receiver side and an authentication key used in the authentication must be shared in advance. However, in order to execute this key exchange in the communication, such key exchange must be carried out under the secure conditions by preventing a tampering of the key and an illegal acquisition. Therefore, normally the key exchange is carried out by using IKE (Internet Key Exchange).

In IKE, the processes being classified roughly into two stages are executed. That is, first the communication path is ensured by using the public key cryptosystem to make sure of the safe communication path, and then the information such as the cryptographic key, the authentication key, etc. employed in IPsec are exchanged. In the public key cryptosystem, the encrypted communication can be carried out merely by acquiring the information of the public key that is not the secret information, and thus the information can be exchanged safely. However, it takes much time to process the data (about 1000 times compared with the common key cryptography), and thus the public key cryptosystem is unsuited to a situation that a great deal of data should be encrypted in real time. For this reason, the common key cryptography is employed in IPsec, and then the information such as the cryptographic key, the authentication key, etc. employed in the communication of the common key cryptography are exchanged by IKE while using the communication path under the environment that is protected by the public key cryptosystem. Accordingly, the information such as the cryptographic key, the authentication key, etc. can be exchanged safely.

Also, there are types of IKEv1 (RFC2409) and IKEv2 (RFC4306) in IKE. In IKEv2, the authentication system such as EAP-SIM, EAP-AKA, or the like, whose affinity for the cellular phone network is high, can be employed as the standard system. Therefore, much attention is focused on IKEv2.

However, very complicated processes are needed in IKE. It is the actual circumstances that the load is too heavy in contrast to a throughput of the small-sized communication terminal such as the cellular phone terminal device. As a result, it is difficult to employ actually IKEv2.

For this reason, the technology to lessen the processing load of the communication terminal in the key exchange is disclosed in Patent Literature 1, for example. In Patent Literature 1, the communication system as shown in FIG. 6 is assumed, and a reduction of the load of the communication terminal is intended by causing another equipment to execute the processes that are attendant upon the key exchange. Concrete procedures of the key exchanging process in Patent Literature 1 will be given as follows.

In this communication system, when a subscriber terminal 101 connected to a network 100 does not possess a key for the encrypted communication in performing the encrypted communication with a communication destination terminal 102, such subscriber terminal 101 transmits a key exchange proxy request message to a service controlling equipment 103. The service controlling equipment 103 makes an authentication of the subscriber terminal 101 by using an authentication server 104, and then transfers the key exchange proxy request message received from the subscriber terminal 101 to a key exchange proxy server 105. The key exchange proxy server 105, when received the key exchange proxy request message, makes the key exchange with the communication destination terminal 102 via the service controlling equipment 103 and a router 106. Then, the key exchange proxy server 105 transmits key information acquired after the key exchange is completed to the subscriber terminal 101 via the service controlling equipment 103. Accordingly, the subscriber terminal 101 can share the key with the communication destination terminal 102, and can perform the encrypted communication with the communication destination terminal 102.
Patent Literature 1: JP-A-2004-128782

### Disclosure of the Invention

### Problems that the Invention is to Solve

When the technology set forth in Patent Literature 1 is employed, the key exchanging process in which the processing load at the subscriber terminal is lessened can be implemented. At this time, it may be considered that, since the server whose throughput is high acts as proxy in the key exchange, an effect of reducing a processing time can also be achieved in contrast to the case where the subscriber terminal executes the key exchange.

However, in the technology set forth in Patent Literature 1, the key exchange proxy request message is produced from the terminal, and then the key exchange is carried out between the key exchange proxy server and the communication destination terminal. Therefore, it is impossible to avoid such a situation that a latency time needed until the terminal received the key after such terminal sent out the key exchange proxy request message is prolonged. As a result, the subscriber terminal needs much time to start actually the encrypted communication with the communication destination terminal.

Also, the Diffie-Hellman calculation whose processing load is high is contained in this key exchanging process. In particular, in the case where the key exchanging process needed to perform the encrypted communication by IPsec is started in response to the start of Browser or other application as a trigger, a reduction in a degree of user's satisfaction and user's convenience is brought about when a time consumed until the encrypted communication can be held actually becomes long.

The present invention has been made in view of the above circumstance, and it is an object of the present invention to provide a network relay device, a communication terminal, and an encrypted communication method, capable of shortening a time required until encrypted communication is started actually after a trigger for start of an encrypted communication is produced.

### Means for Solving the Problems

According to the present invention, there is provided a network relay device for performing relay communication between a communication terminal and a communication destination device in a communication system in which the communication terminal performs encrypted communication with the communication destination device via a public network, the network relay device including: a key exchange controller for executing, out of a key exchanging process which is divided into a former-half process and a later-half process, the former-half process with the communication destination device substitute for the communication terminal when the key exchanging process is to be applied in order to exchange key information upon encrypting a communication performed between the communication terminal and the communication destination device; an information manager for managing information of communication terminals that are connected to the network relay device; and a key information transferring section for transferring former-half process information containing the key information obtained by the former-half process of the key exchange process.
According to this configuration, the network relay device executes the former-half process of the key exchange process substitute for the communication terminal. Therefore, the communication terminal as well as the communication destination device can complete the key exchange process by using the former-half process information, and a time required for actually starting encrypted communication after a trigger for start of an encrypted communication can be shortened.

Also, the present invention includes the network relay device, wherein the network relay device performs a communication with the communication terminal via a local network to which the communication terminal is connected, and performs a communication with a gateway device which is provided between the public network and an external network, or an external device which is connected to the external network via the gateway device, as the communication destination device. According to this configuration, the encrypted communication can be started in a shorter time from the communication terminal which is connected to the local network, to the gateway device which is provided between the public network and the external network, or the external device which is connected to the external network via the gateway device, via the relay of the network relay device and the public network.

Also, the present invention includes the network relay device, wherein the key exchange controller executes a process in conformity with an IKEv2 standard used in an IPv6 or IPv4 protocol in the key exchanging process, and an IKE_SA_INIT process containing an exchange of a Diffie-Hellman parameter necessary for production of a cryptographic key is contained in the former-half process of the key exchanging process.
According to the configuration, the network relay device executes the Diffie-Hellman calculation whose processing load is heavy, as the former-half process of the key exchanging process substitute for the communication terminal. Therefore, the communication terminal can receive the former-half process information from the network relay device, and can complete the key exchanging process only by executing the later-half process whose processing load is light. As a result, the encrypted communication can be started in a shorter time.

Also, the present invention includes the network relay device further including an address processor for keeping in advance a local IP address for the communication terminal on the local network, wherein the key exchange controller executes the former-half process of the key exchanging process with the communication destination device by using the kept local IP address, and wherein the key information transferring section transfers the kept local IP address and the key information obtained by the former-half process to the communication terminal as the former-half process information.
According to this configuration, the communication terminal can execute the later-half process of the key exchanging process with the communication destination device by using the local IP address and the key information being received. The communication destination device can recognize such a situation that this communication destination device executes the former-half process and the later-half process of the key exchanging process with the same communication terminal respectively and exchanges the key information. Also, for example, when a plurality of communication terminals are connected to the local network, each communication terminal can exchange the key information from each communication destination device because the network relay device can allocate the different local IP address to the communication terminals respectively.

According to the present invention, there is provided a communication terminal for performing encrypted communication with a communication destination device via a public network in a communication system, by using a network relay device that performs a relay communication with the communication destination device, the communication terminal including: a key information receiver for receiving, in a case where out of a key exchanging process which is divided into a former-half process and a later-half process, the former-half process is executed by the network relay device with the communication destination device substitute for the communication terminal when the key exchanging process is to be applied in order to exchange key information upon encrypting a communication performed between the communication terminal and the communication destination device, former-half process information containing key information obtained by the former-half process out of the key exchanging process; and a key exchange controller for executing the later-half process of the key exchanging process with the communication destination device by using the former-half process information.
According to the configuration, the communication terminal can complete the key exchanging process with the communication destination device by using the former-half process information obtained by the former-half process of the key exchanging process, which is executed in the network relay device, and a time required for actually starting encrypted communication after a trigger for start of an encrypted communication can be shortened. Also, the network relay device can execute the former-half process even before the communication terminal is connected to the network relay device, for example, and the communication terminal can start the later-half process by using the received former-half process information immediately after this communication terminal is connected to the network relay device. Therefore, a latency time required for starting the encrypted communication can be shortened considerably.

Also, the present invention includes the communication terminal, wherein the key exchange controller executes a process in conformity with an IKEv2 standard used in an IPv6 or IPv4 protocol in the key exchanging process, and an IKE_AUTH process containing exchanges of a cryptographic key and authentication information is contained in the later-half process of the key exchanging process.
According to the configuration, the network relay device executes the former-half process of the key exchanging process, and the communication terminal can receive the former-half process information from the network relay device and can complete the key exchanging process only by executing the later-half process whose processing load is light. Therefore, the encrypted communication can be started in a shorter time.

Also, the present invention includes the communication terminal, wherein the key information receiver receives as the former-half process information a local IP address on a local network allocated to the communication terminal from the network relay device and the key information obtained by the former-half process, and wherein the key exchange controller executes the later-half process of the key exchanging process with the communication destination device by using the local IP address and the key information being received.
According to the configuration, the communication terminal can execute the later-half process of the key exchanging process with the communication destination device by using the local IP address and the key information being received. The communication destination device can recognize such a situation that this communication destination device executes the former-half process and the later-half process of the key exchanging process with the same communication terminal respectively and exchanges the key information. Also, for example, when a plurality of communication terminals are connected to the local network, each communication terminal can exchange the key information from each communication destination device because the network relay device can allocate the different local IP address to the communication terminals respectively.

According to the present invention, there is provided an encrypted communication method applied to a communication system for performing a relay communication between a communication terminal and a communication destination device via a network relay device when the communication terminal performs an encrypted communication with the communication destination device via a public network, the encrypted communication method including: a key exchange former-half process executing step of dividing contents of a key exchanging process into a former-half process and a later-half process when the key exchanging process is to be applied in order to exchange key information upon encrypting a communication performed between the communication terminal and the communication destination device, and executing the former-half process of the key exchanging process with the communication destination device substitute for the communication terminal in the network relay device; a key information transferring step of transferring former-half process information containing the key information which is obtained by the former-half process of the key exchanging process, from the network relay device to the communication terminal; and a key exchange later-half process executing step of executing the later-half process of the key exchanging process with the communication destination device in the communication terminal by using the transferred former-half process information.
According to the procedure, the network relay device executes the former-half process of the key exchange process substitute for the communication terminal. Therefore, the communication terminal as well as the communication destination device can complete the key exchange process by using the former-half process information, and a time required for actually starting encrypted communication after a trigger for start of an encrypted communication can be shortened.

Also, the present invention includes the encrypted communication method, wherein the network relay device performs the communication with the communication terminal via a local network to which the communication terminal is connected, and performs the communication with a gateway device which is provided between the public network and an external network, or an external device which is connected to the external network via the gateway device, as the communication destination device.
According to the procedure, the encrypted communication can be started in a shorter time from the communication terminal which is connected to the local network, to the gateway device which is provided between the public network and the external network, or the external device which is connected to the external network via the gateway device, via the relay of the network relay device and the public network.

Also, the present invention includes the encrypted communication method, wherein a process in conformity with an IKEv2 standard used in an IPv6 or IPv4 protocol is executed in the key exchanging process, wherein an IKE_SA_INIT process containing an exchange of a Diffie-Hellman parameter necessary for production of a cryptographic key is contained in the key exchange former-half process executing step, and wherein an IKE_AUTH process containing exchanges of a cryptographic key and authentication information is contained in the key exchange later-half process executing step.
According to the procedure, the network relay device executes the Diffie-Hellman calculation whose processing load is heavy, as the former-half process of the key exchanging process substitute for the communication terminal. Therefore, the communication terminal can receive the former-half process information from the network relay device, and can complete the key exchanging process only by executing the later-half process whose processing load is light. As a result, the encrypted communication can be started in a shorter time.

Also, the present invention includes the encrypted communication method, wherein, in the key exchange former-half process executing step, the network relay device keeps in advance the local IP address on the local network for the communication terminal, and executes the former-half process of the key exchanging process with the communication destination device by using the kept local IP address, wherein, in the key information transferring step, the kept local IP address and the key information obtained by the former-half process are transferred from the network relay device to the communication terminal as the former-half process information, and wherein, in the key exchange later-half process executing step, the communication terminal executes the later-half process of the key exchanging process with the communication destination device by using the local IP address and the key information received from the network relay device.
According to the procedure, the communication terminal can execute the later-half process of the key exchanging process with the communication destination device by using the local IP address and the key information being received. The communication destination device can recognize such a situation that this communication destination device executes the former-half process and the later-half process of the key exchanging process with the same communication terminal respectively and exchanges the key information. Also, for example, when a plurality of communication terminals are connected to the local network, each communication terminal can exchange the key information from each communication destination device because the network relay device can allocate the different local IP address to the communication terminals respectively.

### Advantages of the Invention

According to the present invention, there can be provided the network relay device, the communication terminal, and the encrypted communication method, capable of shortening a time required until encrypted communication is started actually after a trigger for start of the encrypted communication.

### Brief Description of the Drawings

FIG. 1 is a block diagram showing a configurative example of a communication system according to an embodiment of the present invention and a transition of operation states.
FIG. 2 is a block diagram showing a configurative example of a network relay device in the communication system of the present embodiment.
FIG. 3 is a schematic view showing a configurative example of an information management table that the communication system of the present embodiment employs and a transition of the operation states.
FIG. 4 is a block diagram showing a configurative example of a communication terminal in the communication system of the present embodiment.
FIG. 5 is a sequence diagram showing operations of a key exchanging process in the communication system of the present embodiment.

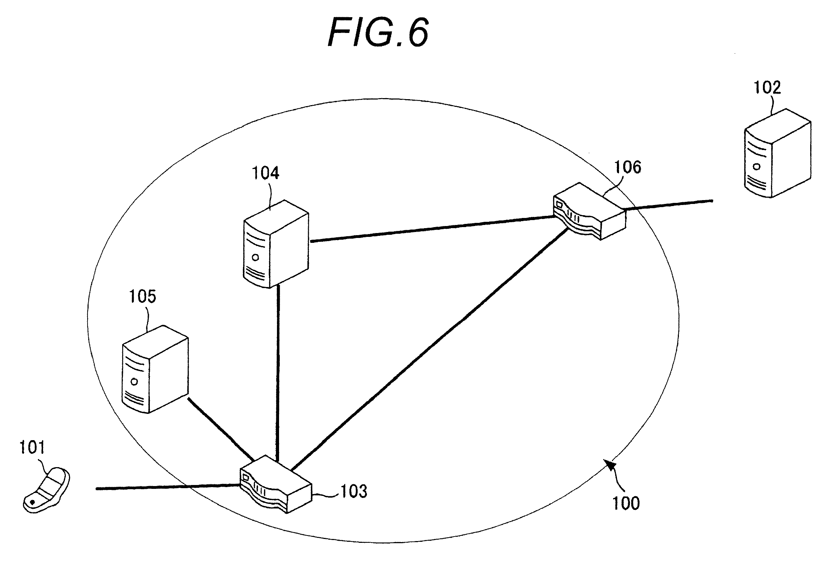

FIG. 6 is a block diagram showing a configuration of a communication system in the background art.

### Description of Reference Numerals and Signs

- 10: local network
- 11: communication terminal
- 15: network relay device
- 20: access network
- 25: gateway device (PDG)
- 30: carrier network
- 31: server
- 111: transmission/reception processor
- 112: key exchange controller
- 113: wireless/IP connection controller
- 114: encryption/decryption controller
- 115: key manager
- 116: application processor
- 151: transmission/reception processor
- 152: NAPT processor
- 153: key exchange controller
- 154: information manager
- 155: WLAN connection controller
- 156: DHCP processor
- 157: key information transmitter
- 158: transmission/reception processor
- 160: information management table
- PR1: key exchange former-half process
- PR2: key exchange later-half process

### Best Mode for Carrying Out the Invention

In the present embodiment, explanation will be made by taking a communication system, in which a communication terminal such as a cellular phone terminal device, or the like is connected to a local area network using a wireless LAN and performs encrypted communication with a carrier network of the communications industry such as a cellular phone network, or the like via an access network, as an example.

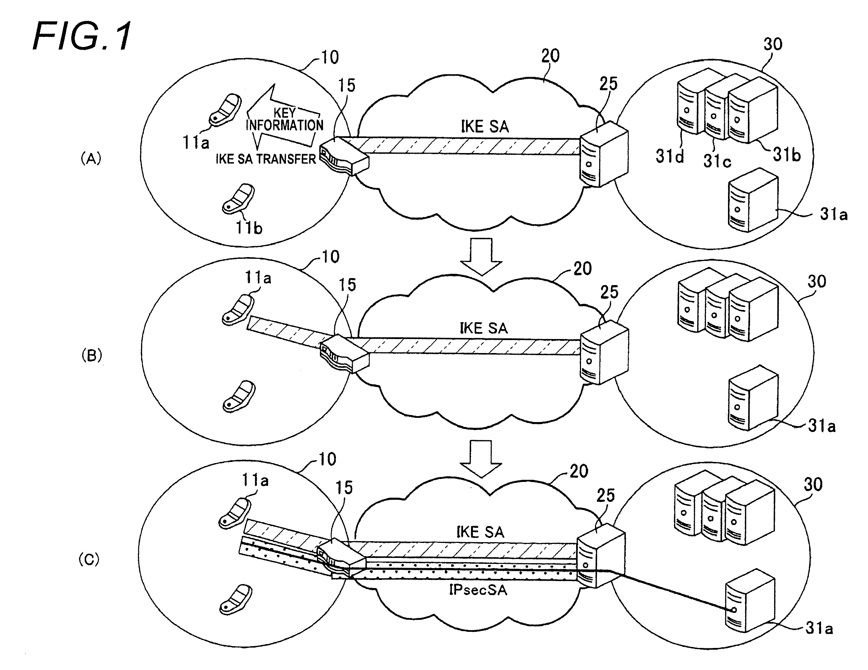

FIG. 1 is a block diagram showing a configurative example of a communication system according to an embodiment of the present invention and a transition of operation states. Here, the case where the present invention is applied to a configuration of a communication system that performs encrypted communication in a state that a local network 10, an access network 20, and a carrier network 30 are connected is illustrated.

The local network 10 is a network constructed at each base point of the wireless LAN, or the like. As the local network 10, the wired IP network, or the like may be employed. One or more communication terminals 11 are connected to the local network 10. In an example in FIG. 1, two communication terminals 11a, 11b are connected to the local network 10. The communication terminal 11 will be explained in behalf of these communication terminals hereinafter. As a concrete example of the communication terminal 11, a cellular phone terminal device, a mobile information terminal (PDA), etc., which are equipped with a function of communicating with the wireless LAN, are assumed.

The access network 20 connects the local network 10 to the carrier network 30 to perform the communication, and enables the user to access to the carrier network 30 from the local network 10. This access network 20 is constructed by the public network such as the Internet, the IP network for communication, or the like, which can respond the wide area communication and various communication services. A network relay device 15 is provided at the boundary between the local network 10 and the access network 20.

The network relay device 15 corresponds to a communication device such as a router, and the like, which are set up at customer place such as an ordinary home or an office, access points such as street or station, for example. This network relay device 15 has a radio connecting function and a NAPT (Network Address Port Translation) function. The network relay device 15 exchanges the IP packet between the local network 10, which is built up in vicinity of the customer place, the access points, and the like, and the access network 20. In this case, NAPT is a data converting function that is installed in the common router or gateway and enables a plurality of private IP addresses to utilize one global IP address. The communication terminal 11 is contained in the local network 10 that the network relay device 15 provides.

The carrier network 30 corresponds to the communication network such as the cellular phone network that handles a mobile communication, which is provided by the communications industry, and is constructed every communications industry. A plurality of servers 31a, 31b, 31c, 31d,... such as a Web server that handles the provision of contents and the like are connected to this carrier network 30. The server 31 will be explained in behalf of these servers hereinafter. A gateway device (PDG) 25 is provided to the boundary between the access network 20 and the carrier network 30. Accordingly, respective communication terminals 11 included in the local network 10 are connected to the carrier network 30 via the network relay device 15 and the gateway device (PDG) 25, and can access to the server 31 to perform the communication.

In the above communication system, the communication must be performed via the access network 20 as the public network when the communication terminal 11 on the local network 10 is connected to the carrier network 30. Therefore, safety of communication must be ensured. For this purpose, encrypted communication is held between the communication terminal 11 and the server 31 of the carrier network 30. Concretely, IPsec is utilized as the protocol of the encrypted communication. Also, since a common key cipher is employed in IPsec, the communication terminal 11 and the server 31 of the communication destination must share the information such as cryptographic key, authentication key, etc. used in this common key cipher communication. Therefore, in order to exchange the key information, etc. through the communication under the safe environment, the key information, etc. are exchanged by executing the process based on IKEv2 as the key exchange protocol.

In this event, a load of the process of IPsec is heavy, and a required time becomes long until the process is completed. Therefore, in the present embodiment, the key exchanging process of IKEv2 is executed by employing a special method. That is, the key exchanging process of IKEv2 to exchange the key information is divided into a "former-half process" (called a "key exchange former-half process" hereinafter) and a "later-half process" (called a "key exchange later-half process" hereinafter), and the "key exchange former-half process" is executed by the network relay device 15 substitute for the communication terminal 11.

Concretely, the process of "IKE_SA_INIT exchanges" contained in IKEv2 is allocated to the "key exchange former-half process" in the key exchanging process. Also, the process of "IKE_AUTH exchanges" contained in IKEv2 is allocated to the "key exchange later-half process".

Therefore, in the present embodiment, as shown in (A) of FIG. 1, the "key exchange former-half process" is carried out between the network relay device 15 and the gateway device 25. Then, the resultant information is transferred from the network relay device 15 to the communication terminal 11. Then, as shown in (B) of FIG. 1, the "key exchange later-half process" is carried out between the communication terminal 11 and the gateway device 25. Accordingly, "IPsec SA (Security Association)" as a logical connection for encrypted communication is established between the communication terminal 11 and the gateway device 25. As a result, as shown in (C) of FIG. 1, the encrypted communication can be held between the communication terminal 11 and the gateway device 25. Details of the key exchanging process will be explained in detail with reference to a sequence diagram later.

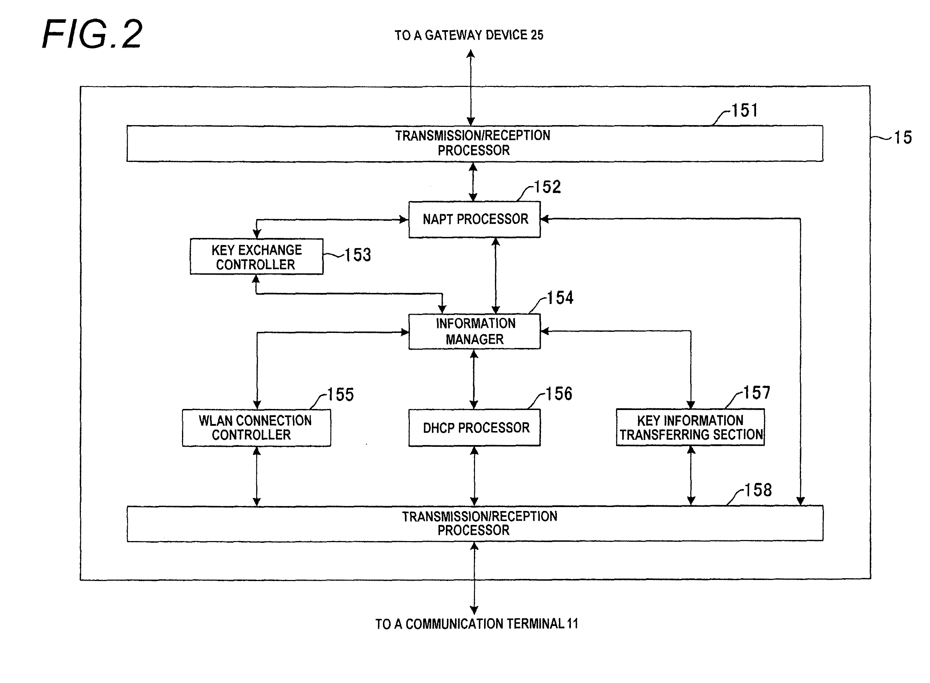

FIG. 2 is a block diagram showing a configurative example of a network relay device in the communication system of the present embodiment.

The network relay device 15 includes a transmission/reception processor 151, a NAPT processor 152, a key exchange controller 153, an information manager 154, a WLAN connection controller 155, a DHCP processor 156, a key information transmitter 157, and a transmission/ reception processor 158.

The transmission/reception processors 151, 158 execute transmitting/receiving processes of the communication signal between the inside of the network relay device 15 and the outside respectively. The transmission/reception processor 151 is connected to the gateway device 25 via the access network, and the transmission/reception processor 158 is connected to the communication terminal 11 via the local network 10.

In the communication system shown in FIG. 1, such a case is assumed that the transmission/reception processor 151 in the network relay device 15 is constructed as the wired transmission/reception processor whereas the transmission/reception processor 158 is constructed as the wireless transmission/reception processor. That is, the transmission/reception processor 151 is utilized in inputting/outputting the data into/from the access network 20 as the wired network, and the transmission/reception processor 158 is utilized in inputting/outputting the data into/from the local network 10 as the wireless network.

The NAPT (Network Address Port Translation) processor 152 executes the converting process of the IP address/ port number of the IP packet that is received from the transmission/reception processor 151 and the transmission/reception processor 158, and makes it possible to transmit/receive the IP packet between the local network 10 and the access network 20. The NAPT processor 152 has a NAPT table, and executes the conversion of the IP address and the port number between the local network 10 side and the access network 20 side by referring to this NAPT table.

The key exchange controller 153 executes the "key exchange former-half process" in the key exchanging process between the network relay device 15 and the gateway device 25. In the "key exchange former-half process", the key exchange controller 153 executes the message exchange with the gateway device 25 via the NAPT processor 152 and the NAPT processor 152.

In starting the "key exchange former-half process", the key exchange controller 153 refers to the contents of an information management table held by the information manager 154, to search whether or not there is the terminal that needs the key exchange. The information manager 154 stores various information concerning the interconnection of the encrypted communication in the information management table. When the terminal that needs the key exchange exists in the local network 10, the key exchange controller 153 executes the "key exchange former-half process" up to the required number of terminals respectively. In this case, as the transmitter-side IP address required as the parameter in exchanging the key, the key exchange controller 153 acquires the local IP address, which is allocated previously to the communication terminal, from the information manager 154 and uses it.

Also, in the "key exchange former-half process" between the network relay device 15 and the gateway device 25, the sender IP address/ port number of the IP packet are converted by the NAPT processor 152, and then the IP packet is sent out from the transmission/reception processor 151.

When the "key exchange former-half process" is completed in the key exchange controller 153, the acquired key information is registered in the information manager 154. In this case, it is assumed that the key exchange controller 153 can establish the "IPsec SA" between the network relay device 15 and the gateway device 25 by executing a series of key exchanging processes completely based on IKEv2. Accordingly, the encrypted communication can be held between the network relay device 15 and the gateway device 25.

The WLAN (wireless LAN) connection controller 155 executes the connecting process containing the authentication and the encryption when the communication terminal 11 is connected to the network relay device 15 by wireless communication. The WLAN connection controller 155, when received a wireless connection request from the transmission/ reception processor 158, decides whether or not the communication terminal 11 can be connected. In deciding whether or not the connection can be attained, the filtering by using MAC (Media Access Control) address, the authentication protocol such as IEEE802.1x/EAP, etc. may be employed.

The DHCP (Dynamic Host Configuration Protocol) processor 156 has a function of the address processor. The DHCP processor 156 allocates the local IP address in response to the IP address acquiring request issued from the communication terminal 11 that succeeded in the wireless connection to the network relay device 15. In allocating the local IP address, first the DHCP processor 156 refers to the information manager 154. When the IP address has already been allocated to the concerned communication terminal, the DHCP processor 156 acquires the IP address information, and transmits it to the communication terminal 11 as the DHCP message. Also, as the result of the reference to the information manager 154, when the IP address has not been allocated to the concerned communication terminal, the DHCP processor 156 keeps the IP address allocated to the communication terminal. Then, the DHCP processor 156 registers the kept IP address in the information manager 154, and also transmits the DHCP message to the communication terminal.

The key information transmitter 157 transmits the information which the key exchange controller 153 has acquired by executing the "key exchange former-half process" between the network relay device 15 and the gateway device 25, to the communication terminal 11. Here, the key information transmitter 157 acquires the to-be- transferred information from the information manager 154. The information manager 154 manages the information of the terminals and the key information acquired by the "key exchange former-half process", while using the information management table.

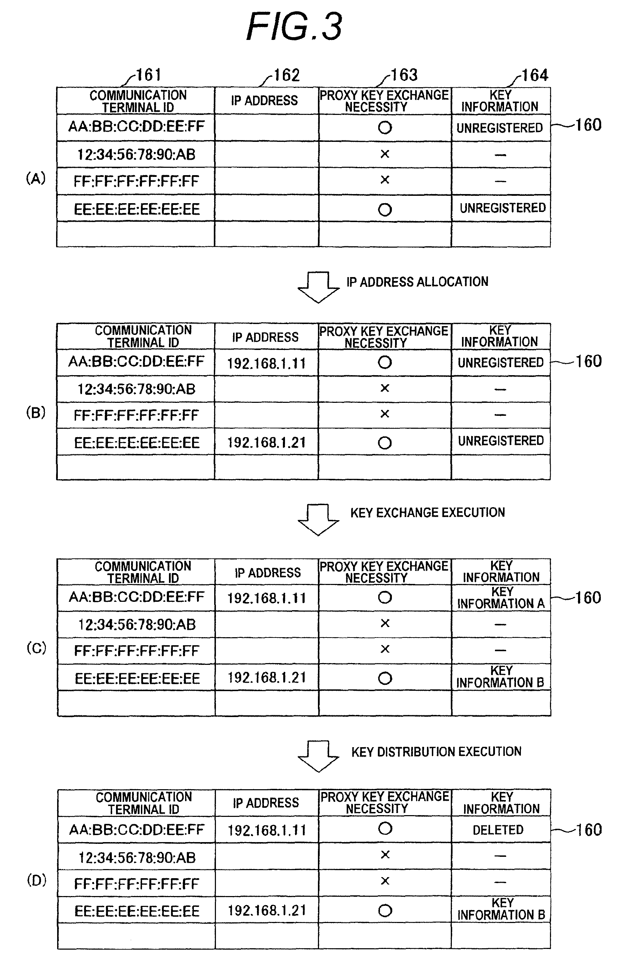

FIG. 3 is a schematic view showing a configurative example of an information management table that the communication system of the present embodiment employs and a transition of the operation states.

An information management table 160 provided in the information manager 154 holds information elements such as a communication terminal ID 161, an IP address 162, a proxy key exchange necessity flag 163, a key information 164.

The communication terminal ID 161 on the information management table 160 is ID through which an individual identification of the communication terminal can be made. Here, MAC addresses allocated to the radio communication interfaces of the communication terminal respectively are set as the ID. In this case, in addition to the MAC address, various IDs such as terminal ID that the communication industry allocates to the communication terminal, user ID of the contractor allocated to SIM, USIM, etc. may be employed.

The proxy key exchange necessity flag 163 on the information management table 160 is a flag that is used to indicate whether or not the key exchange process should be executed by the network relay device 15. The setting of the proxy key exchange necessity flag may be applied manually to the network relay device 15 by the user's operation. Also, the proxy key exchange necessity flag may be set to all communication terminals that the WLAN connection controller 155 allows to access to the network relay device 15.

The key information 164 on the information management table 160 holds the key information obtained as the result of the "key exchange former-half process", i.e., the key exchanging process up to "IKE_SA_INIT exchange", executed by the network relay device 15. Values of SPI, Diffie- Hellman Value, Nonce, etc. are contained in this key information.

The IP address 162 on the information management table 160 holds the local IP addresses allocated to the communication terminals. In this case, when the proxy key exchange necessity flag indicates that the key exchange is needed and the local IP addresses is not registered, the information management table 160 keeps newly the local IP address, and registers it in the information management table 160.

First, as shown in (A) of FIG. 3, the communication terminal ID 161 and the proxy key exchange necessity flag 163 are registered every communication terminal in the local network 10. Then, as shown in (B) of FIG. 3, either the local IP addresses previously-allocated to the communication terminal whose proxy key exchange necessity flag 163 is active and which needs the key exchange or the local IP addresses previously-allocated to such communication terminal by DHCP is acquired, and is registered as the IP address 162. Then, as shown in (C) of FIG. 3, the key information acquired in the "key exchange former-half process" is registered as the key information 164. Then, as shown in (D) of FIG. 3, the key information is transferred to the communication terminal, and is deleted from the information management table 160.

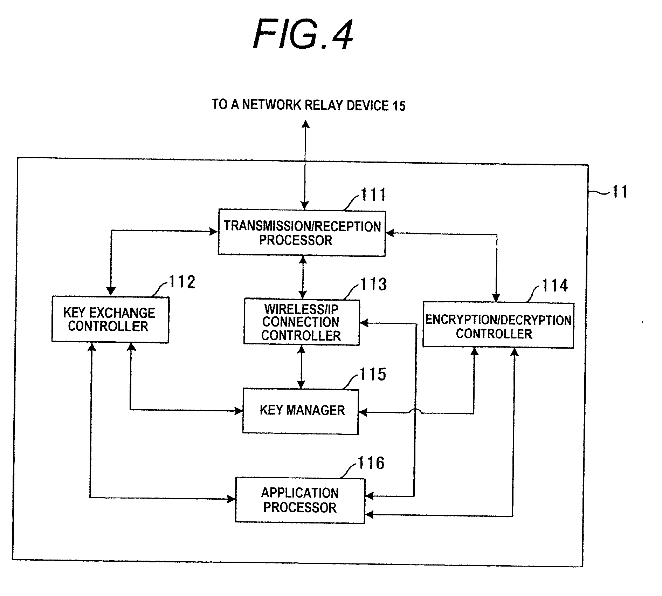

FIG. 4 is a block diagram showing a configurative example of a communication terminal in the communication system of the present embodiment.

The communication terminal 11 includes a transmission/reception processor 111, a key exchange controller 112, a wireless/IP connection controller 113, an encryption/decryption controller 114, a key manager 115, and an application processor 116.

The transmission/reception processor 111 executes the transmitting/receiving process between the communication terminal 11 and the network relay device 15 via the radio communication, and inputs/outputs the data into/from the local network 10.

The application processor 116 is the processing element that operates on this communication terminal and has a function of executing the application program that utilizes the IP communication. For example, there is the browser as the typical example of the application program, but other application programs may be executed. For example, when a trigger for start of the encrypted communication is produced in the application processor 116 based on the start of the application program, or the like, the application processor 116 issues a communication start request to the wireless/IP connection controller 113.

As with the application program executed on the communication terminal 11, the encrypted communication can be held between the communication terminal 11 and the gateway device 25 after a logical connection for the encrypted communication being called the "IPsec SA" is established.

In the wireless/IP connection controller 113, a radio connecting process based upon IEEE 802.11a/b/g or other wireless LAN connection specifications and a IP connecting process based upon the IP address allocated by DHCP are executed. This wireless/IP connection controller 113, when received the communication start request from the application program, establishes the wireless connection between the communication terminal 11 and the network relay device 15. Then, the wireless/IP connection controller 113 acquires the local IP address from the network relay device 15 based on DHCP, and the communication terminal 11 can perform the IP communication. Also, the wireless/IP connection controller 113 has a function as the key information receiver, and acquires the key information necessary for the encrypted communication from the network relay device 15. The acquired key information is registered in the key manager 115, and also transferred to the key exchange controller 112.

The key exchange controller 112, when received the key information, executes the "key exchange later-half process" in the key exchanging process between the communication terminal 11 and the gateway device 25. At this time, the key exchange controller 112 performs the authentication by utilizing the IC card (the card provided with the authentication information) such as SIM, USIM provided to the communication terminal 11. Accordingly, the user's information that the communication industry possesses can be reflected in the authentication of the communication terminal 11.

When the "key exchange later-half process" by the key exchange controller 112 is completed and the establishment of the "IPsec SA" is completed between the communication terminal 11 and the gateway device 25, the key information produced during this while is registered in the key manager 115.

In this case, it is assumed that the key exchange controller 112 can also establish the "IPsec SA" between the communication terminal 11 and the gateway device 25, by executing a series of key exchanging processes based on IKEv2 fully. Accordingly, upon connecting the communication terminal 11 to the access network via the network relay device that cannot act as proxy in the "key exchange former-half process", the encrypted communication can be held between the communication terminal 11 and the gateway device 25.

The encryption/decryption controller 114 executes the encrypting/decrypting process (processes of encryption and decryption) of the IP packet by using the key information registered in the key manager 115. Here, whether or not the encrypting/decrypting process should be applied and which key information should be employed are controlled by the policies regarding the encrypted communication, which are constructed by sender/destination IP addresses, sender/destination port numbers, employed protocol (UDP/TCP), etc.

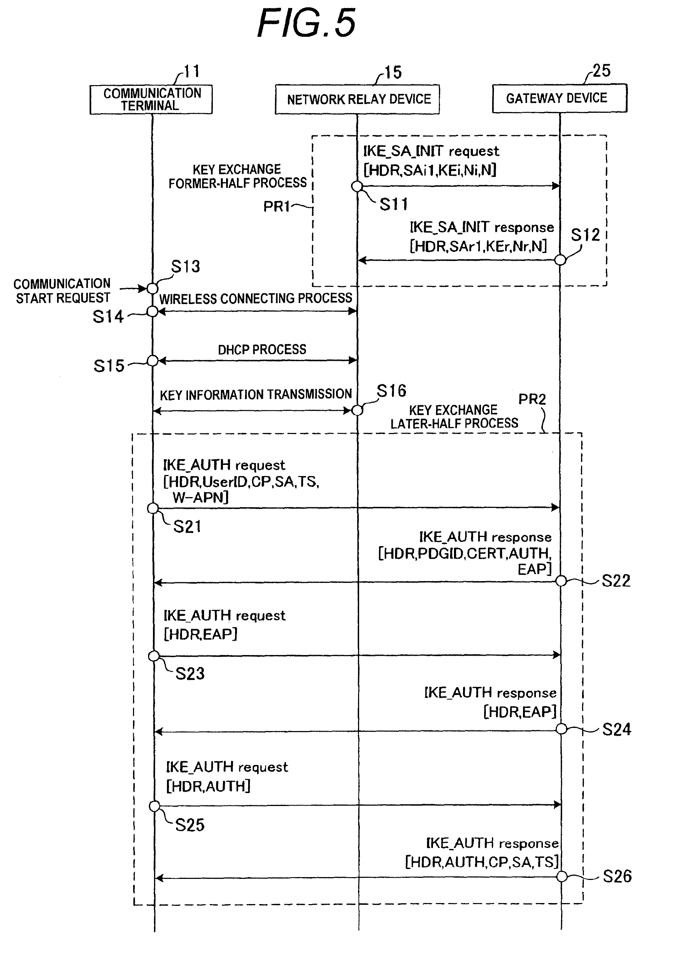

FIG. 5 is a sequence diagram showing operations of a key exchanging process in the communication system of the present embodiment. Here, details of an operation sequence of the key exchanging process, which enables the communication terminal 11 and the gateway device 25 to perform the encrypted communication between them, will be explained hereunder.

The network relay device 15 manages in advance the information regarding the communication terminals which are scheduled to perform the encrypted communication with the gateway device 25, in the information management table 160. Therefore, as shown in FIG. 5, the network relay device 15 can commence a key exchange former-half process PR1 before respective communication terminals 11 are connected to the network relay device 15.

More particularly, as described above, the key exchange controller 153 in the network relay device 15 (see FIG. 2) finds the communication terminals that need the key exchange, by referring to the information held by the information management table 160 (see FIG. 3) in the information manager 154. Then, the key exchange controller 153 executes the key exchange former-half process PR1 by using the concerned local IP address, substitute for the concerned communication terminals.

In this key exchange former-half process PR1, an "IKE_SA_INIT exchange" of the IKEv2 process is executed as the key exchange former-half process between the network relay device 15 and the gateway device 25. Here, in IKEv2, "IKE SA" can be established between necessary nodes on the network by exchanging messages of "IKE_SA_INIT" request and response and messages of "IKE_AUTH" request and response. In this case, the processes about the "IKE_SA_INIT" request and response are assigned to the key exchange former-half process PR1, and the processes about the "IKE_AUTH" request and response are assigned to a key exchange later-half process PR2 described later. That is, the processes in IKEv2 are divided previously to two parts, i.e., the key exchange former-half process PR1 and the key exchange later-half process PR2.

In step S11 shown in FIG. 5, the network relay device 15 transmits an "IKE_SA_INIT request" containing HDR, SAi1, KEi, Ni, N to the gateway device 25. Then, in step S12, the gateway device 25 transmits an "IKE_SA_INIT response" containing HDR,SAr1,KEr,Nr,N to the network relay device 15.

Actually, in the "IKE_SA_INIT", the SA (IKE SA) information used to protect the key exchange between two nodes and the Diffie-Hellman parameter used to produce the cryptographic key are exchanged. Upon exchanging the parameter, execution of the calculating process whose processing load is very heavy is needed. In this case, the network relay device 15 executes this process substitute for the communication terminal and the communication terminal 11 is not needed to execute this process, so that the encrypted communication can be held not to increase the burden in process on the communication terminal 11.

When the key exchange former-half process PR1 is completed, the network relay device 15 causes the information management table 160 to hold the information which is required to produce the cryptographic key, as the key information.

Then, in step S13, a communication start request is issued from the communication terminal 11. In subsequent step S14, a wireless connecting process is executed between the communication terminal 11 and the network relay device 15.

Then, if the wireless connection from the communication terminal 11 to the network relay device 15 succeeded, the IP address is acquired by the DHCP process in step S15. The network relay device 15 allocates the local IP address of the terminal which is used in executing the key exchange former-half process PR1, to the concerned communication terminal 11, based on the information held in the information management table 160. Then, in step S16, the network relay device 15 transmits the key information that the network relay device 15 has acquired in advance for the communication terminal 11 to the communication terminal 11.

The communication terminal 11, after received the key information from the network relay device 15, starts the execution of the key exchange later-half process PR2. At this time, it is assumed that, in the authentication of the communication terminal 11, the IC card such as SIM, USIM, which the communication terminal possesses is used as the authentication information such as EAP-AKA,. Accordingly, the communication industry can perform the authentication of the subscriber without fail, and can guarantee the security.

In the key exchange later-half process PR2, the process of "IKE_AUTH exchanges" is executed between the communication terminal 11 and the gateway device 25. In this case, the signal that the communication terminal 11 sends out is transferred to the gateway device 25 via the network relay device 15, and the signal that the gateway device 25 transmits is transferred to the communication terminal 11 via the network relay device 15. In the "IKE_AUTH", the authentication information of the crytptographic key is exchanged between two nodes.

In step S21, the communication terminal 11 sends out an "IKE_AUTH request" containing HDR, User ID, CP, SA, TS, W-APN. The gateway device 25, when received the "IKE_AUTH request", sends out an "IKE_AUTH response" containing HDR, PDGID, CERT, AUTH, EAP in next step S22.

Then, the communication terminal 11, when received the "IKE_AUTH response" from the gateway device 25, sends out an "IKE_AUTH request" containing HDR, EAP in step S23. The gateway device 25, when received this "IKE_AUTH request", sends out an "IKE_AUTH response" containing HDR, EAP in step S24.

Then, the communication terminal 11, when received the "IKE_AUTH response" from the gateway device 25, sends out an "IKE_AUTH request" containing HDR, AUTH in step S25. The gateway device 25, when received the "IKE_AUTH request", sends out an "IKE_AUTH response" containing HDR, AUTH, CP, SA, TS in step S26.

With the above processes, the communication terminal 11 can share the same key information with the gateway device 25. As a result, the communication terminal 11 can perform the encrypted communication in unit of packet in compliance with the IPsec protocol by using the key information.

In the communication system shown in FIG. 1, the case where the communication terminal 11 and the network relay device 15 are constructed as the independent equipment respectively is assumed. Alternatively, the communication terminal 11 may be equipped with the function of the network relay device 15. For example, when the local network is constructed by a plurality of communication terminals, the particular communication terminal may be constructed to have the function of the network relay device, and this communication terminal may fulfill the role of the network relay device. In this case, there is no necessity that the network relay device should be provided separately. Of course, the network relay device has to execute a complicated process whose processing load is heavy. Therefore, the communication terminal equipped with the function of the network relay device must have the high-performance processing equipment.

As described above, in the present embodiment, the key exchanging process based upon IKE is divided into to processes, i.e., the former-half process and the later-half process. The process of "IKE_SA_INIT exchanges" is allocated to the key exchange former-half process, and the process of "IKE_AUTH exchanges" is allocated to the key exchange later-half process. Then, the key exchange former-half process is carried out between the network relay device and the gateway device, and the "IKE_SA" as a logical connection for the key exchange is established. When the communication terminal is connected to the network relay device, the network relay device transmits the key information acquired by the key exchange former-half process to the communication terminal, so that the "IKE_SA" is transferred from the network relay device to the communication terminal.

The communication terminal, which has received the key information from the network relay device and to which the "IKE_SA" is transferred, executes the key exchange former-half process together with the gateway device by using the key information. When the key exchange later-half process is completed, the "IPsec SA" as the logical connection for the encrypted communication can be established. As a result, the encrypted communication can be held between the communication terminal and the gateway device.

Here, the network relay device gets the local IP address in advance while such network relay device executes the key exchange former-half process with the gateway device, and then the network relay device performs the message exchange with the gateway device by using the IP address. Then, when the key exchange former-half process is completed and the communication terminal is connected to the network relay device, the network relay device distributes the previously kept IP address and the acquired key information. Then, in the key exchange later-half process, the gateway device 25 executes the authentication by using the ID information of the IC card such as USIM, that the communication terminal possesses.

In this case, in the network relay device, the process of "IKE_SA_INIT exchanges" containing the Diffie- Hellman computation whose processing load is heavy is carried out as the key exchange former-half process previously, for example, before the communication terminal is connected. Therefore, the process executed in the communication terminal after the communication start request is issued is restricted only to the key exchange later-half process. As a result, the communication terminal can perform the encrypted communication not to apply the process whose processing load is heavy. Also, a latency time of the communication terminal attendant upon the key exchanging process can be reduced largely, and a required time for actually starting the encrypted communication can be reduced.

Also, when the network relay device executes a plurality of key exchange former-half processes in such a mode that the network relay device executes the key exchange former-half process based on the local IP address being kept in advance and distributes the key information as well as the local IP address to the communication terminals, the gateway device side can recognize such a situation that the network relay device is now executing the key exchange process for the different communication terminal. As a result, one network relay device can produce the key information for a plurality of communication terminals.

According to the above configurations and the procedures, not only a latency time required for actually starting the encrypted communication after the application program acting as a trigger for the start of the encrypted communication is commenced can be reduced, but also the processing load required for the communication terminal can be lessened.

Here, the present invention is not limited to those illustrated in the above embodiment. The present invention is susceptible to variations and adaptations that those skilled in the art make based upon the recitation of the specification and the well-known technology, and the variations and the adaptations are contained in a scope in which the protection is sought.

### Industrial Applicability

The present invention possesses such an advantage that a time required for actually starting encrypted communication after the trigger for start of the encrypted communication can be shortened, and is useful to the network relay device, the communication terminal, the encrypted communication method, and the like in the communication system that performs a relay communication between the wireless LAN and the cellular phone network, to which the communication terminal such as the cellular phone terminal device, for example, is connected.

## Claims

1. A network relay device for performing relay communication between a communication terminal and a communication destination device in a communication system in which the communication terminal performs encrypted communication with the communication destination device via a public network, the network relay device comprising:
a key exchange controller for executing, out of a key exchanging process which is divided into a former-half process and a later-half process, the former-half process with the communication destination device substitute for the communication terminal when the key exchanging process is to be applied in order to exchange key information upon encrypting a communication performed between the communication terminal and the communication destination device;
an information manager for managing information of communication terminals that are connected to the network relay device; and
a key information transferring section for transferring former-half process information containing the key information obtained by the former-half process of the key exchange process.

2. The network relay device according to claim 1, wherein the network relay device performs a communication with the communication terminal via a local network to which the communication terminal is connected, and performs a communication with a gateway device which is provided between the public network and an external network, or an external device which is connected to the external network via the gateway device, as the communication destination device.

3. The network relay device according to claim 2, wherein the key exchange controller executes a process in conformity with an IKEv2 standard used in an IPv6 or IPv4 protocol in the key exchanging process, and an IKE_SA_INIT process containing an exchange of a Diffie-Hellman parameter necessary for production of a cryptographic key is contained in the former-half process of the key exchanging process.

4. The network relay device according to claim 2, further comprising:
an address processor for keeping in advance a local IP address for the communication terminal on the local network,
wherein the key exchange controller executes the former-half process of the key exchanging process with the communication destination device by using the kept local IP address, and
wherein the key information transferring section transfers the kept local IP address and the key information obtained by the former-half process to the communication terminal as the former-half process information.

5. A communication terminal for performing encrypted communication with a communication destination device via a public network in a communication system, by using a network relay device that performs a relay communication with the communication destination device, the communication terminal comprising:
a key information receiver for receiving, in a case where out of a key exchanging process which is divided into a former-half process and a later-half process, the former-half process is executed by the network relay device with the communication destination device substitute for the communication terminal when the key exchanging process is to be applied in order to exchange key information upon encrypting a communication performed between the communication terminal and the communication destination device, former-half process information containing key information obtained by the former-half process out of the key exchanging process; and
a key exchange controller for executing the later-half process of the key exchanging process with the communication destination device by using the former-half process information.

6. The communication terminal according to claim 5, wherein the key exchange controller executes a process in conformity with an IKEv2 standard used in an IPv6 or IPv4 protocol in the key exchanging process, and an IKE_AUTH process containing exchanges of a cryptographic key and authentication information is contained in the later-half process of the key exchanging process.

7. The communication terminal according to claim 5, wherein the key information receiver receives as the former-half process information a local IP address on a local network allocated to the communication terminal from the network relay device and the key information obtained by the former-half process, and
wherein the key exchange controller executes the later-half process of the key exchanging process with the communication destination device by using the local IP address and the key information being received.

8. An encrypted communication method applied to a communication system for performing a relay communication between a communication terminal and a communication destination device via a network relay device when the communication terminal performs an encrypted communication with the communication destination device via a public network, the encrypted communication method comprising:
a key exchange former-half process executing step of dividing contents of a key exchanging process into a former-half process and a later-half process when the key exchanging process is to be applied in order to exchange key information upon encrypting a communication performed between the communication terminal and the communication destination device, and executing the former-half process of the key exchanging process with the communication destination device substitute for the communication terminal in the network relay device;
a key information transferring step of transferring former-half process information containing the key information which is obtained by the former-half process of the key exchanging process, from the network relay device to the communication terminal; and
a key exchange later-half process executing step of executing the later-half process of the key exchanging process with the communication destination device in the communication terminal by using the transferred former-half process information.

9. The encrypted communication method according to claim 8, wherein the network relay device performs the communication with the communication terminal via a local network to which the communication terminal is connected, and performs the communication with a gateway device which is provided between the public network and an external network, or an external device which is connected to the external network via the gateway device, as the communication destination device.

10. The encrypted communication method according to claim 9, wherein a process in conformity with an IKEv2 standard used in an IPv6 or IPv4 protocol is executed in the key exchanging process,
wherein an IKE_SA_INIT process containing an exchange of a Diffie-Hellman parameter necessary for production of a cryptographic key is contained in the key exchange former-half process executing step, and
wherein an IKE_AUTH process containing exchanges of a cryptographic key and authentication information is contained in the key exchange later-half process executing step.

11. The encrypted communication method according to claim 9, wherein, in the key exchange former-half process executing step, the network relay device keeps in advance the local IP address on the local network for the communication terminal, and executes the former-half process of the key exchanging process with the communication destination device by using the kept local IP address,
wherein, in the key information transferring step, the kept local IP address and the key information obtained by the former-half process are transferred from the network relay device to the communication terminal as the former-half process information, and
wherein, in the key exchange later-half process executing step, the communication terminal executes the later-half process of the key exchanging process with the communication destination device by using the local IP address and the key information received from the network relay device.

## Amended claims

### Amended claims under Art. 19.1 PCT

1. A network relay device for performing relay communication between a communication terminal and a communication destination device in a communication system in which the communication terminal performs encrypted communication with the communication destination device via a public network, the network relay device comprising:
a key exchange controller for executing, out of a key exchanging process which is divided into a former-half process and a later-half process, the former-half process with the communication destination device substitute for the communication terminal when the key exchanging process is to be applied in order to exchange key information upon encrypting a communication performed between the communication terminal and the communication destination device;
an information manager for managing information of communication terminals that are connected to the network relay device; and
a key information transferring section for transferring former-half process information containing the key information obtained by the former-half process of the key exchange process.

2. The network relay device according to claim 1, wherein the network relay device performs a communication with the communication terminal via a local network to which the communication terminal is connected, and performs a communication with a gateway device which is provided between the public network and an external network, or an external device which is connected to the external network via the gateway device, as the communication destination device.

3. The network relay device according to claim 2, wherein the key exchange controller executes a process in conformity with an IKEv2 standard used in an IPv6 or IPv4 protocol in the key exchanging process, and an IKE_SA_INIT process containing an exchange of a Diffie-Hellman parameter necessary for production of a cryptographic key is contained in the former-half process of the key exchanging process.

4. The network relay device according to claim 2, further comprising:
an address processor for keeping in advance a local IP address for the communication terminal on the local network,
wherein the key exchange controller executes the former-half process of the key exchanging process with the communication destination device by using the kept local IP address, and
wherein the key information transferring section transfers the kept local IP address and the key information obtained by the former-half process to the communication terminal as the former-half process information.

5. A communication terminal for performing encrypted communication with a communication destination device via a public network in a communication system, by using a network relay device that performs a relay communication with the communication destination device, the communication terminal comprising:
a key information receiver for receiving, in a case where out of a key exchanging process which is divided into a former-half process and a later-half process, the former-half process is executed by the network relay device with the communication destination device substitute for the communication terminal when the key exchanging process is to be applied in order to exchange key information upon encrypting a communication performed between the communication terminal and the communication destination device, former-half process information containing key information obtained by the former-half process out of the key exchanging process; and
a key exchange controller for executing the later-half process of the key exchanging process with the communication destination device by using the former-half process information.

6. The communication terminal according to claim 5, wherein the key exchange controller executes a process in conformity with an IKEv2 standard used in an IPv6 or IPv4 protocol in the key exchanging process, and an IKE_AUTH process containing exchanges of a cryptographic key and authentication information is contained in the later-half process of the key exchanging process.

7. The communication terminal according to claim 5, wherein the key information receiver receives as the former-half process information a local IP address on a local network allocated to the communication terminal from the network relay device and the key information obtained by the former-half process, and
wherein the key exchange controller executes the later-half process of the key exchanging process with the communication destination device by using the local IP address and the key information being received.

8. An encrypted communication method applied to a communication system for performing a relay communication between a communication terminal and a communication destination device via a network relay device when the communication terminal performs an encrypted communication with the communication destination device via a public network, the encrypted communication method comprising:
a key exchange former-half process executing step of dividing contents of a key exchanging process into a former-half process and a later-half process when the key exchanging process is to be applied in order to exchange key information upon encrypting a communication performed between the communication terminal and the communication destination device, and executing the former-half process of the key exchanging process with the communication destination device substitute for the communication terminal in the network relay device;
a key information transferring step of transferring former-half process information containing the key information which is obtained by the former-half process of the key exchanging process, from the network relay device to the communication terminal; and
a key exchange later-half process executing step of executing the later-half process of the key exchanging process with the communication destination device in the communication terminal by using the transferred former-half process information.

9. The encrypted communication method according to claim 8, wherein the network relay device performs the communication with the communication terminal via a local network to which the communication terminal is connected, and performs the communication with a gateway device which is provided between the public network and an external network, or an external device which is connected to the external network via the gateway device, as the communication destination device.

10. The encrypted communication method according to claim 9, wherein a process in conformity with an IKEv2 standard used in an IPv6 or IPv4 protocol is executed in the key exchanging process,
wherein an IKE_SA_INIT process containing an exchange of a Diffie-Hellman parameter necessary for production of a cryptographic key is contained in the key exchange former-half process executing step, and
wherein an IKE_AUTH process containing exchanges of a cryptographic key and authentication information is contained in the key exchange later-half process executing step.

11. The encrypted communication method according to claim 9, wherein, in the key exchange former-half process executing step, the network relay device keeps in advance the local IP address on the local network for the communication terminal, and executes the former-half process of the key exchanging process with the communication destination device by using the kept local IP address,
wherein, in the key information transferring step, the kept local IP address and the key information obtained by the former-half process are transferred from the network relay device to the communication terminal as the former-half process information, and
wherein, in the key exchange later-half process executing step, the communication terminal executes the later-half process of the key exchanging process with the communication destination device by using the local IP address and the key information received from the network relay device.

12. (Added) The network relay device according to claim 1, wherein, in a case where a connection is being established with the communication terminal after the key exchange controller executes the former-half process of the key exchange process, the key information transferring section allows the communication terminal to execute the later-half process of the key exchange process by transferring the former-half process information containing the key information obtained by the former-half process of the key exchange process.
